# EUROPEAN PATENT SPECIFICATION

(11) **EP 3 528 399 B1**
(45) Date of publication and mention of the grant of the patent: **18.11.2020**
(21) Application number: 18157025.0
(22) Date of filing: 15.02.2018
(51) Int. Cl.: H04B 7/08, H04W 56/00, H04W 74/00, H04W 74/08

(54) **SELECTION OF BEAM FAILURE RECOVERY REQUEST RESOURCE**
AUSWAHL EINER STRAHLAUSFALLWIEDERHERSTELLUNGSANFORDERUNGSRESSOURCE
SÉLECTION DE RESSOURCE DE DEMANDE DE REPRISE APRÈS DÉFAILLANCE DE FAISCEAU

(43) Date of publication of application: 21.08.2019
(73) Proprietor: Nokia Technologies Oy, 02610 Espoo (FI)
(72) Inventor: TURTINEN, Samuli, 91100 Ii (FI); KOZIOL, Dawid, 67-200 Glogow (PL); KOSKELA, Timo, 90120 Oulu (FI)
(74) Representative: TBK

(56) References cited:
- US-A1- 2017 373 741
- QUALCOMM INCORPORATED: "Beam recovery procedures", 3GPP DRAFT; R1-1711161 BEAM RECOVERY PROCEDURES, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Qingdao, P.R. China; 20170627 - 20170630 26 June 2017 (2017-06-26), XP051300361, Retrieved from the Internet: URL:http://www.3gpp.org/ftp/Meetings_3GPP_ SYNC/RAN1/Docs/ [retrieved on 2017-06-26]
- QUALCOMM INCORPORATED: "Beam recovery procedure", 3GPP DRAFT; R2-1703561 BEAM-RECOVERY-PROCEDURE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Spokane, USA; 20170403 - 20170407 3 April 2017 (2017-04-03), XP051245400, Retrieved from the Internet: URL:http://www.3gpp.org/ftp/Meetings_3GPP_ SYNC/RAN2/Docs/ [retrieved on 2017-04-03]

## Description

### Field of the invention

The present invention relates to an apparatus, a method, and a computer program product related to beam failure recovery.

### Abbreviations

- 3GPP: 3^{rd} Generation Partnership Project
- 4G / 5G: 4^{th} / 5^{th} Generation
- BFR: Beam Failure Recovery
- BI: Backoff Indicator
- CBRA: Contention Based Random Access
- CE: Control Element
- CG: Cell Group
- C-RNTI: Cell-RNTI
- CSI-RS: Channel State Information RS
- DC: Dual Connectivity
- DMRS: Demodulation Reference Signal
- DRX: Discontinuous Reception
- FFS: For further study
- gNB: next generation NodeB
- HARQ: Hybrid Automatic Repeat Request
- HO: Handover
- IoT: Internet of Things
- L1 / L2 / L3: Layer 1 (= PHY) / Layer 2 (= MAC) / Layer 3 (=Transport)
- LS: Liaison Statement
- LTE: Long Term Evolution
- MAC: Medium Access Control
- MCG: Master Cell Group
- NB: NodeB
- NR: New Radio
- NTA: New Timing Advance
- NW: Network
- PBCH: Physical Broadcast Channel
- PDCCH: Physical Downlink Control Channel
- PHY: Physical Layer
- PRACH: Physical Random Access Channel
- PSCell: Primary Secondary Cell
- pTAG: Primary Timing Advance Group
- PUCCH: Physical Uplink Control Channel
- RACH: Random Access Channel
- RAN: Radio Access Network
- RAPID: Random Access Preamble Identifier
- RAR: Random Access Response
- RA-RNTI: Random Access-RNTI
- Rel: Release
- RNTI: Radio Network Temporary Identifier
- RRC: Radio Resource Control
- RS: Reference Signal
- SCell: Secondary Cell
- SCG: Secondary Cell Group
- SpCell: Special Cell
- SRS: Sounding Reference Signal
- SSB: Synchronization Signal Block
- SS-RSRP: Synchronization Signal - Reference Signal Received Power
- sTAG: Secondary Timing Advance Group
- TA: Timing Advance
- TAC: Timing Advance Command
- TAG: Timing Advance Group
- TAT: Time Alignment Timer
- TB: Transport Block
- TCI: Transmission Configuration Indication
- TP: Text Proposal
- TRP: Transmission/Reception Point
- TS: Technical Specification
- UE: User Equipment
- UL: Uplink

### Background of the invention

In NR, a beam of a cell may be lost / degrade due to various reasons especially in higher frequencies, e.g., due to beam blockage, beam misalignment or changes in radio environment so that the current beams do not provide adequate quality for communication. Although the current beam cannot be used, UE may have an alternative beam of the same cell that is usable. When there exists alternative beam(s) for communication, the connection between the UE and the network should be recovered via beam recovery procedure.

For beam management, the UE measures beam specific reference signals (e.g., CSI-RS/SS Block). Based on the measurements, the UE reports detected beams according to network configuration. Out of the reported beams, network indicates UE the beams for PDCCH monitoring. UE may be configured with multiple PDCCH beams e.g. corresponding to different UE/gNB beams for robustness: in case one PDCCH beam fails alternative beam may be used.

3GPP RAN1 has made the following agreements for beam recovery:
3GPP RAN1#89 Agreements:
- Support the following channel(s) for beam failure recovery request transmission:
   - Non-contention based channel based on PRACH, which uses a resource orthogonal to resources of other PRACH transmissions, at least for the FDM case
   - FFS Contention-based PRACH resources as supplement to contention-free beam failure recovery resources
      - From traditional RACH resource pool
      - 4-step RACH procedure is used
      - Note: contention-based PRACH resources is used e.g., if a new candidate beam does not have resources for contention-free PRACH-like transmission
   - FFS whether a UE is semi-statically configured to use one of them or both, if both, whether or not support dynamic selection of one of the channel(s) by a UE if the UE is configured with both.

Based on RAN1 agreement, when the quality of all the serving control channel links fail i.e. the quality of the channels fall below a threshold a beam failure can be declared. Once beam failure has been declared, UE can trigger beam failure recovery signal to indicate new candidate beam to network (if detected). Currently UE is able to indicate new candidate beam based on dedicated signal on PRACH resources. In case only subset of the control channels fail ("partial beam failure"), RAN1 has not agreed exact mechanisms.

3GPP RAN2#100 meeting agreed with respect to Beam Failure Recovery Request procedure:

### Agreements

*1 The reception of the gNB response to beam recovery request sent on RACH is based on the monitoring of a PDCCH addressed to C-RNTI within a time duration configured by RRC.*
*2 Beam recovery can take place on a candidate beam (e.g. beams above threshold) with dedicated PRACH resources either associated with an SSB or CSI-RS resource.*
*3: When more than one beam is a valid candidate, it is up to UE implementation to select the beam.*

In an offline discussion (3GPP R2-1714178) the following was agreed:

### Agreements

*1: For beam recovery purposes RRC signalling allows the case of configuring both SSB* + *CSI-RS (i.e. simultaneously) for new candidate beam identification. The case where only one of SSB or CSI-RS resource is configured is also covered* - *i.e. this is network configuration.*
*2: When more than one beam is a valid candidate, it is up to UE implementation to select either the SSB based resource or the CSI-RS based resource.*

SSB (also denoted as SS/PBCH Block) and CSI-RS beams are beams using different reference signals. For instance, SSB beam may use measurements on the SSS (Secondary Synchronization Signal) and optionally PBCH DMRS. CSI-RS beam may use measurements on the CSI-RS.

### Agreements

*1. Beam failure recovery using a dedicated PRACH preamble is specified in the MAC and triggered upon indication from Physical layer. RAN2 assumes that the PHY layer does the detection of beam failure.*
*2. Beam selection is specified in the MAC similar to the HO case*
*3. The UE uses contention free when there is a beam associated to a dedicated "preamble*/*resource" and the beam is above a threshold. Otherwise use contention based.*

In the agreed TP in R2-1714047, the beam failure recovery request procedure requests the RA procedure to do random access, and RA procedure then checks whether beams are available that are allocated to dedicated contention free RA resources for beam failure recovery. I.e., it is checked if the beams can be detected and if they meet the quality threshold configured by the network. Otherwise, UE may perform contention based RA. I.e., in case contention free RA resources dedicated to beam failure recovery are not available in the identified beam(s) or they are not configured for the UE at all, UE may perform contention based RA.

The issue of how TA maintenance is performed in case of multi-TRP is not yet resolved for NR. However, with non-collocated TRPs serving a single cell, the UE may have to issue different timing alignment for different beams.

According to the MAC specification for beam recovery, RRC configures the following parameters for the Random Access procedure:
- the set of Random Access Preambles and/or PRACH resources for beam failure recovery request, if any;

The MAC entity shall:
1> if the Random Access procedure was initiated by a beam failure indication from lower layer; and
1> if the contention-free random access resources for beam failure recovery request associated with any of the beams (regardless if SS blocks and/or CSI-RSs) have been explicitly provided by RRC; and
1> if at least one of the SS blocks with SS-RSRP above *rsrp-ThresholdSSB* amongst the associated SS blocks or the CSI-RSs with CSI-RSRP above *csirs-Threshold* amongst the associated CSI-RSs is available:
2> select an SS block with SS-RSRP above *rsrp-ThresholdSSB* amongst the associated SS blocks or a CSI-RS with CSI-RSRP above *csirs-Threshold* amongst the associated CSI-RSs;
2> set the *PREAMBLE_INDEX* to a *ra-Preamblelndex* corresponding to the selected SS block or CSI-RS from the set of Random Access Preambles for beam failure recovery request.

Once the Random Access Preamble is transmitted and regardless of the possible occurrence of a measurement gap, the MAC entity shall in Random Access Response reception:
(...)
1> else if the contention-free Random Access Preamble for beam failure recovery request was transmitted by the MAC entity:
   2> start the *ra-ResponseWindowBFR* at the first PDCCH occasion as specified in TS 38.213 [6] from the end of the Random Access Preamble transmission;
   2> monitor the PDCCH of the SpCell for response to beam failure recovery request identified by the C-RNTI while *ra-ResponseWindowBFR* is running.
1> else:
   2> start the *ra-ResponseWindow* at the first PDCCH occasion as specified in TS 38.213 [6] from the end of the Random Access Preamble transmission;
   2> monitor the PDCCH of the SpCell for Random Access Response(s) identified by the RA-RNTI while the *ra-ResponseWindow* is running.
1> if notification of a reception of a PDCCH transmission is received from lower layers; and
1> if PDCCH transmission is addressed to the C-RNTI; and
1> if the contention-free Random Access Preamble for beam failure recovery request was transmitted by the MAC entity:
   2> consider the Random Access procedure successfully completed.
1>else if a downlink assignment has been received on the PDCCH for the RA-RNTI and the received TB is successfully decoded:
   2> if the Random Access Response contains a Random Access Preamble identifier corresponding to the transmitted *PREAMBLE_INDEX* (see subclause 5.1.3):
      3> consider this Random Access Response reception successful.
   2> if the Random Access Response reception is considered successful:
      3> if the Random Access Response includes RAPID only:
      4> consider this Random Access procedure successfully completed;
      4> indicate the reception of an acknowledgement for the SI request to upper layers.

In LTE, when TAT expires, the following is specified in 3GPP TS 36.321:

| |
|---|
| - when a *timeAlignmentTimer* expires: |
| - if the *timeAlignmentTimer* is associated with the pTAG: |
| - flush all HARQ buffers for all serving cells; |
| - notify RRC to release PUCCH for all serving cells; |
| - notify RRC to release SRS for all serving cells; |
| - clear any configured downlink assignments and uplink grants; |
| - consider all running *timeAlignmentTimers* as expired; |
| - else if the *timeAlignmentTimer* is associated with an sTAG, then for all Serving Cells belonging to this TAG: |
| - flush all HARQ buffers; |
| - notify RRC to release SRS; |
| - notify RRC to release PUCCH, if configured. |

TAT runs per MAC entity or per UE, but not per a single beam.

In latest draft of NR MAC specifications, not yet agreed, the corresponding section reads as follows:

| |
|---|
| 1> when a *timeAlignmentTimer* expires: |
| 2> if the *timeAlignmentTimer* is associated with the PTAG: |
| 3> flush all HARQ buffers for all serving cells; |
| 3> notify RRC to release PUCCH for all serving cells, if configured; |
| 3> notify RRC to release SRS for all serving cells, if configured; |
| 3> deactivate any configured downlink assignments and uplink grants; |
| *Editor's note: The above text is inherited from LTE. How to capture*/ *describe SPS details (e.g. whether to differentiate Type 1, Type 2) should be discussed first.* |
| 3> consider all running *timeAlignmentTimers* as expired; |
| 3> maintain N_{TA} (defined in TS 38.211 [8]) of all TAGs. |
| 2> else if the *timeAlignmentTimer* is associated with an STAG, then for all Serving Cells belonging to this TAG: |
| 3> flush all HARQ buffers; |
| 3> notify RRC to release SRS, if configured; |
| 3> notify RRC to release PUCCH, if configured. |
| 3> maintain N_{TA} (defined in TS 38.211 [8]) of this TAG. |
| When the MAC entity stops uplink transmissions for an SCell due to the fact that the maximum uplink transmission timing difference or the maximum uplink transmission timing difference the UE can handle between TAGs of any MAC entity of the UE is exceeded, the MAC entity considers the *timeAlignmentTimer* associated with the SCell as expired. |
| The MAC entity shall not perform any uplink transmission on a Serving Cell except the Random Access Preamble transmission when the *timeAlignmentTimer* associated with the TAG to which this Serving Cell belongs is not running. Furthermore, when the *timeAlignmentTimer* associated with the pTAG is not running, the MAC entity shall not perform any uplink transmission on any Serving Cell except the Random Access Preamble transmission on the SpCell. |

### MAC specifies as follows for LTE:

### 10.1.2.7 Timing Advance

*In RRC_CONNECTED, the eNB is responsible for maintaining the timing advance. Serving cells having UL to which the same timing advance applies (typically corresponding to the serving cells hosted by the same receiver) and using the same timing reference cell are grouped in a timing advance group (TAG). Each TAG contains at least one serving cell with configured uplink, and the mapping of each serving cell to a TAG is configured by RRC. In case of DC, a TAG only includes cells that are associated to the same CG and the maximum number of TAG is 8.*

*For the pTAG the UE uses the PCell in MCG and the PSCell in SCG as timing reference. In* a *sTAG, the UE may use any of the activated SCells of this TAG as a timing reference cell, but should not change it unless necessary.*

*For NB-IoT, the UE uses the anchor carrier as timing reference no matter if the non-anchor carrier is configured or not.*

*In some cases (e.g. during DRX), the timing advance is not necessarily always maintained and the MAC sublayer knows if the L1 is synchronised and which procedure to use to start transmitting in the uplink:*
- *as long as the L1 is non-synchronised, uplink transmission can only take place on PRACH. For a TAG, cases where the UL synchronisation status moves from "synchronised" to "non-synchronised" include:*
   - *Expiration of a timer specific to the TAG;*
   - *Non-synchronised handover.*

*The synchronisation status of the UE follows the synchronisation status of the pTAG of MCG. The synchronisation status of the UE with respect to SCG follows the synchronisation status of the pTAG of SCG. When the timer associated with pTAG is not running, the timer associated with an sTAG in that CG shall not be running. Expiry of the timers associated with one CG does not affect the operation of the other CG.*

*The value of the timer associated to the pTAG of MCG is either UE specific and managed through dedicated signalling between the UE and the eNB, or cell specific and indicated via broadcast information. In both cases, the timer is normally restarted whenever a new timing advance is given by the eNB for the pTAG:*
- *restarted to a UE specific value if any; or*
- *restarted to a cell specific value otherwise.*

*The value of the timer associated to a pTAG of SCG and the value of a timer associated to an sTAG of an MCG or an sTAG of SCG are managed through dedicated signalling between the UE and the eNB, and the timers associated to these TAGs can be configured with different values. The timers of these TAGs are normally restarted whenever a new timing advance is given by the eNB for the corresponding TAG.*

*Upon DL data arrival or for positioning purpose, a dedicated signature on PRACH can be allocated by the eNB to the UE. When a dedicated signature on PRACH is allocated, the UE shall perform the corresponding random access procedure regardless of its L1 synchronisation status.*

*Timing advance updates are signalled by the eNB to the UE in MAC PDUs.*

*With RACH-less HO, only timing adjustment indication, NTA=0 or reuse NTA from a source eNB, are allowed where NTA denotes a parameter defined in 3GPP TS* 36.213 *and 3GPP TS36.211.*

3GPP DRAFT R1-1711161 QUALCOMM INCORPORATED: "Beam recovery procedures" discloses a method where a UE sends beam failure recovery request when it is aware that it has lost UL synchronization and when it has detected the beam failure and has found a new beam, wherein UL is synchronized when TAT is not over.

3GPP DRAFT R2-1703561 QUALCOMM INCORPORATED: "Beam recovery procedure" dislcoses a method where beam recovery request is sent using contention based PRACH when: UL is out of sync, beam failure is detected and a new beam is available.

US2017/373741A1 discloses contention free RA procedure used for STAG

### Summary of the invention

It is an object of the present invention to improve the prior art.

The invention is defined by the independent claims. Preferred embodiments of the invention are stipulated in the dependent claims.

While several embodiments and/or examples have been disclosed in the description, the subject matter for which protection is sought is strictly and solely limited to those embodiments and/or examples encompassed by the scope of the appended claims. Embodiments and/or examples mentioned in the description that do not fall under the scope of the claims are useful for understanding the invention.

According to a first aspect of the invention, there is provided an apparatus, comprising
first means for detecting configured to detect a beam failure of an active beam used for a communication with a network;
second means for detecting configured to detect if a time alignment timer configured to be used for the communication with the network is expired;
means for monitoring configured to monitor if a first beam is suitable for the communication; means for checking configured to check whether the first beam belongs to a secondary timing advance group;
means for requesting configured to request a new timing advance information from the network by at least one of a medium access control message and a radio resource control message if the first beam belongs to the secondary timing advance group;
means for instructing configured to instruct, if the beam failure is detected and the time alignment timer is expired and the first beam is suitable for the communication, one of:
   transmitting a first preamble of a random access, wherein the first preamble is not reserved for contention-free random access;
   transmitting a second preamble of the random access at a first occasion, wherein the first occasion is not reserved for contention-free access; and
   transmitting a third preamble of the random access at a second occasion, wherein a combination of the third preamble and the second occasion is not reserved for contention-free access;
   means for prohibiting configured to prohibit the means for instructing to instruct transmitting the first preamble if the first beam belongs to the secondary timing advance group;
   characterised by comprising
   means for checking configured to check if the active beam and the first beam belong to a same timing advance group;
   means for inhibiting configured to inhibit the means for instructing to instruct transmitting if the active beam and the first beam belong to the same timing advance group;
   means for commanding configured to command, if the active beam and the first beam belong to the same timing advance group, one of:
      transmitting a fourth preamble of the random access, wherein the fourth preamble is reserved for contention-free random access;
      transmitting a fifth preamble at a third occasion of the random access, wherein the third occasion is reserved for the contention-free random access; and
      transmitting a sixth preamble at a fourth occasion of the random access, wherein a combination of the sixth preamble and the fourth occasion is reserved for contention-free random access.

According to a second aspect of the invention, there is provided a method, comprising
detecting a beam failure of an active beam used for a communication with a network; detecting if a time alignment timer configured to be used for the communication with the network is expired;
monitoring if a first beam is suitable for the communication;
checking whether the first beam belongs to a secondary timing advance group;
requesting a new timing advance information from the network by at least one of a medium access control message and a radio resource control message if the first beam belongs to the secondary timing advance group;
instructing, if the beam failure is detected and the time alignment timer is expired and the first beam is suitable for the communication, one of:
   transmitting a first preamble of a random access, wherein the first preamble is not reserved for contention-free random access;
   transmitting a second preamble of the random access at a first occasion, wherein the first occasion is not reserved for contention-free access; and
   transmitting a third preamble of the random access at a second occasion,
   wherein a combination of the third preamble and the second occasion is not reserved for contention-free access.
   prohibiting the instructing the transmitting the first preamble if the first beam belongs to the secondary timing advance group;
   characterised by comprising
   checking if the active beam and the first beam belong to a same timing advance group;
   inhibiting the instructing the transmitting if the active beam and the first beam belong to the same timing advance group;
   commanding if the active beam and the first beam belong to the same timing advance group, one of:
      transmitting a fourth preamble of the random access, wherein the fourth preamble is reserved for contention-free random access;
      transmitting a fifth preamble at a third occasion of the random access, wherein the third occasion is reserved for the contention-free random access; and
      transmitting a sixth preamble at a fourth occasion of the random access, wherein a combination of the sixth preamble and the fourth occasion is reserved for contention-free random access.

Each of the methods of the first to second aspects may be a method of beam failure recovery.

According to a third aspect of the invention, there is provided a computer program product comprising a set of instructions which, when executed on an apparatus, is configured to cause the apparatus to carry out the method according to any of the first to second aspects.

The computer program product may be embodied as a computer-readable medium or directly loadable into a computer. The medium may be a non-transitory memory.

According to some embodiments of the invention, at least one of the following advantages may be achieved:
- beam failure recovery when multiple distant TRPs are serving one cell;
- Restoration of UL timing alignment with high precision if it is lost (e.g. after time alignment timer expiry);
- Reduced latency;
- Reduced signaling effort;
- Exploitation of existing RA procedures for beam failure recovery;
- Optimized selection of beam in case of full or partial beam failure.

It is to be understood that any of the above modifications can be applied singly or in combination to the respective aspects to which they refer, unless they are explicitly stated as excluding alternatives.

### Brief description of the drawings

Further details, features, objects, and advantages are apparent from the following detailed description of the preferred embodiments of the present invention which is to be taken in conjunction with the appended drawings, wherein:
Fig. 1 shows an apparatus according to an embodiment of the invention;
Fig. 2 shows a method according to an embodiment of the invention;
Fig. 3 shows an apparatus according to an embodiment of the invention;
Fig. 4 shows a method according to an embodiment of the invention;
Fig. 5 shows an apparatus according to an embodiment of the invention;
Fig. 6 shows a method according to an embodiment of the invention;
Fig. 7 shows an apparatus according to an embodiment of the invention;
Fig. 8 shows a method according to an embodiment of the invention; and
Fig. 9 shows an apparatus according to an embodiment of the invention.

### Detailed description of certain embodiments

Herein below, certain embodiments of the present invention are described in detail with reference to the accompanying drawings, wherein the features of the embodiments can be freely combined with each other unless otherwise described. However, it is to be expressly understood that the description of certain embodiments is given by way of example only, and that it is by no way intended to be understood as limiting the invention to the disclosed details.

Moreover, it is to be understood that the apparatus is configured to perform the corresponding method, although in some cases only the apparatus or only the method are described.

There are several cases, where new or different TA values are needed, e.g.:
- beam failure detection (i.e. all active beams fail, wherein an active beam is configured to be used in communication but only one of the active beams is indeed used for the communication) or partial beam failure detection if the new beam does not belong to the same TAG;
- TAT expiry.

In multiple TRP scenario, when different TA (Timing Advance) values need to be applied by the UE when operating in different beams, it is not obvious for NW how to allocate contention free preambles for beam failure recovery for those beams. Especially, if the UE operates on a beam from a different TRP than the beam it will attempt for beam failure recovery.

The same thing happens when Time Alignment Timer has expired (e.g. if any uplink data to transmit has not arrived for a long time) and beam failure is declared. As agreed by RAN1/2 above, since the contention free beam failure recovery request response sent by the NW is addressed to UE's C-RNTI, the UE is not listening to RAR addressed to RA-RNTI.

RAR comprises a 12 bit TAC (Timing Advance Command) field. On the other hand, the TAC MAC CE that the NW may use for adjusting UE timing during the connection is 6 bits long, hence, provides 64 times less granularity than the TAC in RAR. Hence, NW may not be able to adjust UE's timing properly if it cannot send the RAR (addressed to RA-RNTI).

According to some embodiments of the invention, UE may decide if a contention based random access procedure is to be used instead of the contention free beam failure recovery. In the random access procedure, a signal (preamble) is transmitted at a predetermined time (RACH occasion). In the context of the present application, a preamble, a RACH occasion, or a combination of a preamble and a RACH occasion are called a RACH resource (or resource of a random access). For simplicity, some embodiments are explained with respect to a preamble only, but they may use a RACH occasion or a combination of a preamble and a RACH occasion instead, unless otherwise specified or made clear from the context.
The contention free beam failure recovery may refer to random access using dedicated random access preambles and/or PRACH resources configured for beam failure recovery.

In the contention free beam failure recovery procedure, one or more preambles and/or RACH occasions are dedicated for the UE, and these preambles and/or RACH occasions are orthogonal to all other preambles and/or RACH occasions. Thus, if these preambles are transmitted on PRACH, gNB may receive and decode them. Since gNB knows the UE in question based on the preamble signature and/or RACH occasion used by the UE, it responds to UE, wherein UE is addressed by C-RNTI in the PDCCH scheduling the response. The response does not comprise TAC with 12 bits but may only contain TAC with a lower number of bits.

On the other hand, the preambles and/or RACH occasions for contention based RA procedure are not necessarily orthogonal to all other preambles. Besides, the same preamble and/or RACH occasion may be provided to different UEs. Hence, it is not guaranteed that gNB can decode such preamble. If decoding was successful, gNB provides RAR addressed to RA-RNTI of the associated PRACH. RAR comprises TAC with 12 bits, as described above.

Note that TAC with 12 bits corresponds to the current specification but the invention is not limited to 12 bits. In general, TAC in RAR has a higher resolution (more bits) than TAC in response to other uplink transmissions by the UE.

In particular for a case of multiple TRP, in some embodiments of the invention NW may signal to UE whether or not particular beams have the same timing advance (i.e. belong to the same TRP). If - in some embodiments of the invention - such indication is not given, UE assumes for any pair of beams that the timing advance values may be different.

When the UE detects a beam failure of the used active beam and indicates a new candidate beam to the network, it may use contention free BFR resources (preambles and/or RACH occasions) if the new candidate beam and the used active beam have the same timing advance value. However, if the UE assumes that the timing advance values are different, UE needs to obtain a proper TA value for the new candidate beam. Therefore, in these cases, UE uses the contention based random access to obtain the proper TA value in RAR addressed to RA-RNTI.

The preamble used for the contention based RA may be associated to the new candidate beam. Thus, UE informs NW on the new candidate beam by the selected preamble. NW may configure the association between beams and contention-based preambles e.g. in system information. For each contention-based preamble, there is only one beam. However, one or more contention-based preambles may be associated to the same beam.

In some embodiments of the invention, NW may allocate beams to different timing advance groups (TAGs) upon configuring the contention free BFR resources. If the beams belong to the same TAG, UE may use contention free BFR resources, else UE may perform contention based RA.

If TAT is expired, UE may generally use contention based random access procedure regardless of whether or not a contention free beam failure recovery resource for the selected beam is available. In particular, in some embodiments, contention based random access procedure is used regardless of whether the beam belongs to pTAG or sTAG. In some examples, this behaviour may be achieved by releasing the contention free beam failure recovery resources upon TAT expiry. In yet some examples, this behaviour may be achieved by restricting the usage of contention free beam failure recovery resources only to cases when the TAT is running.

However, in some embodiments, if TAT is expired for a beam belonging to sTAG, UE may indicate to the NW by a MAC CE or RRC message that a new TA value is needed for the beam. In response to this request, NW may use PDCCH order to request a contention free random access procedure (which is a different procedure than contention free beam recovery procedure as follows: UE always listens to RA-RNTI. Only in case of contention free resources for beam failure recovery, UE listens to C-RNTI for NW response) to configure new timing for sTAG. That is, in these embodiments, contention based RA procedure may not be used if TAT of a beam belonging to sTAG expires.

In some embodiments, if TAT is expired, UE may use contention free beam failure recovery resource but monitors both C-RNTI and RA-RNTI for response by the NW. The NW determines from the timing of the received preamble whether it has means to adjust the uplink timing of the UE based on the TAC in a MAC CE (with fewer bits available and thus smaller value range available for adjusting the uplink timing advance) or whether it needs to do that with TAC in RAR (with higher number of bits available, like 12 bits). In some examples, when UE receives NW response addressed to C-RNTI, it assumes beam recovery to be successful and stops monitoring RA-RNTI. In some examples, when UE receives NW response addressed to RA-RNTI and decodes correct RAPID corresponding to the transmitted preamble, it stops monitoring C-RNTI.

When the UL access is due to arrival of uplink data and UE has detected a partial beam failure and TAT has expired (i.e., at least the beam used for the communication but not all the beams configured for the communication fail), UE uses the contention based RA procedure. It selects the preamble (CBRA resource) such that the selected preamble is associated with a beam that is an active TCI state (an SSB or CSI-RS reference signal corresponding the transmission beam for PDCCH reception))which is not in failure condition. "Active TCI state" means a beam that is configured for the communication with the network.

In some embodiments, if there are active TCI states (CSI-RS and SS/PBCH block beams) which are not in failure condition, UE further prioritizes active TCI state (or states) with CSI-RS which is not in failure condition over active TCI states with SS/PBCH block which is not in failure condition. UE may indicate the CSI-RS TCI state using CBRA resources mapped to SS blocks, in this case it may generate beam report and indicate CSI-RS resource e.g. in message 3 of the RA procedure (i.e. in response to RAR).

In some embodiments, UE prioritizes the CBRA resource selection in a manner that it even selects a CBRA resource corresponding to non-active TCI state in case the signal quality (in terms of RSRP, RSRQ, SINR, hypothetical PDCCH BLER as defined in radio link monitoring, or the like, or a combination thereof) of the non-active TCI state is higher than the current active TCI state by a threshold X. X may be predefined or configured by the network. As long as the alternative Downlink RS quality with CBRA resource which is not currently configured as active TCI state is not higher than the current active TCI state by the threshold (sometimes referred as an offset value which may be negative or positive or zero), UE does not select the non-active TCI state.

In some embodiments, if no TCI state (active or inactive) has a quality above the threshold value, UE selects and indicates downlink RS (SSB or CSI-RS) that has the highest signal quality. Also in this case, the selected CBRA resource may be mapped to already configured TCI state.

In some embodiments, in case UE has been configured with multiple active TCI states (referred here as links), UE may prioritize the primary link over secondary links if such is configured. In one example, if UE is monitoring PDCCH on multiple links network may configure a time domain pattern so that in time instance T1 UE monitors PDCCH on link1 and in time instance T2 on link2. Network can indicate explicitly which link is the primary link or it may be determined implicitly by UE in case network has configured UE to monitor link1 more frequently than link2.

In some embodiments, the UE may not release the configuration for contention free BFR resources upon TAT expiry as they can be considered valid for/after obtaining new TA value.

In some embodiments, the contention free BFR resources are reserved for beam failure recovery. In these embodiments, the contention free BFR resources must not be used without beam failure.

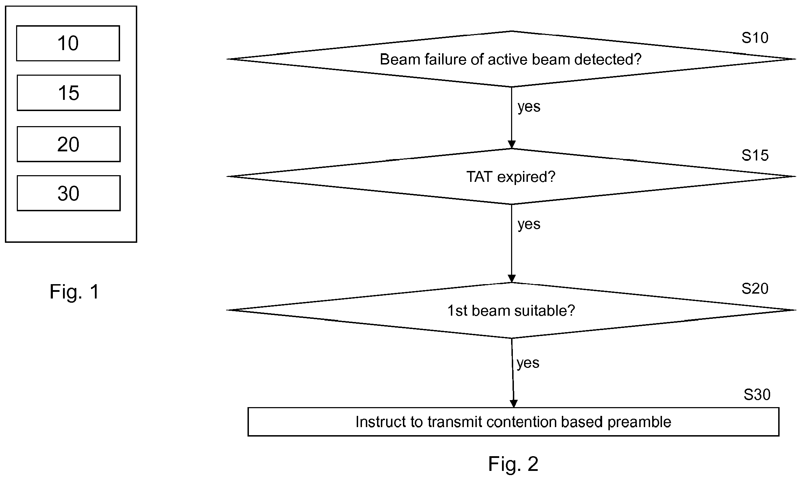

Fig. 1 shows an apparatus according to an embodiment of the invention. The apparatus may be a terminal such as a UE, an loT device, etc., or an element thereof. Fig. 2 shows a method according to an embodiment of the invention. The apparatus according to Fig. 1 may perform the method of Fig. 2 but is not limited to this method. The method of Fig. 2 may be performed by the apparatus of Fig. 1 but is not limited to being performed by this apparatus.

The apparatus comprises first means for detecting 10, second means for detecting 15, means for monitoring 20, and means for instructing 30. The first and second means for detecting 10 and 15, means for monitoring 20, and means for instructing 30 may be first and second detecting means, monitoring means, and instructing means, respectively. The first and second means for detecting 10 and 15, means for monitoring 20, and means for instructing 30 may be a first and second detectors, monitor, and instructor, respectively. The first and second means for detecting 10 and 15, means for monitoring 20, and means for instructing 30 may be a detecting processor, monitoring processor, and instructing processor, respectively.

The first means for detecting 10 detects a beam failure of an active beam (S10). The active beam is used for a communication with a network.

The second means for detecting 15 detects if a time alignment timer is expired (S15). The time alignment timer is used for the communication with the network.

The means for monitoring 20 monitors if a first beam is suitable for the communication (S20). The first beam may be different from the active beam. The first beam is suitable for the communication if the communication on the higher layers (L2, L3, etc.) may be continued without modification but on the physical layer (L1), the active beam is replaced by the first beam.

S10, S15, and S20 may be performed in an arbitrary sequence. A later one may be performed only if the earlier one is affirmative. S10, S15, and S20 may be performed fully or partly in parallel.

If the beam failure is detected (S10 = "yes"), the time alignment timer is expired (S15 = "yes"), and the first beam is suitable for the communication (S20 = "yes"), the means for instructing 30 instructs transmitting a preamble of a random access (S30). The transmitted preamble is not reserved for contention-free random access but for contention based random access. The transmitted preamble may be associated to the first beam.

Instead of a transmitting a preamble reserved for contention-free random access, a (arbitrary) preamble may be transmitted at an occasion not reserved for contention-free random access. As a further alternative, a preamble may be transmitted at an occasion, wherein the combination of preamble and occasion is not reserved for the contention-free random access.

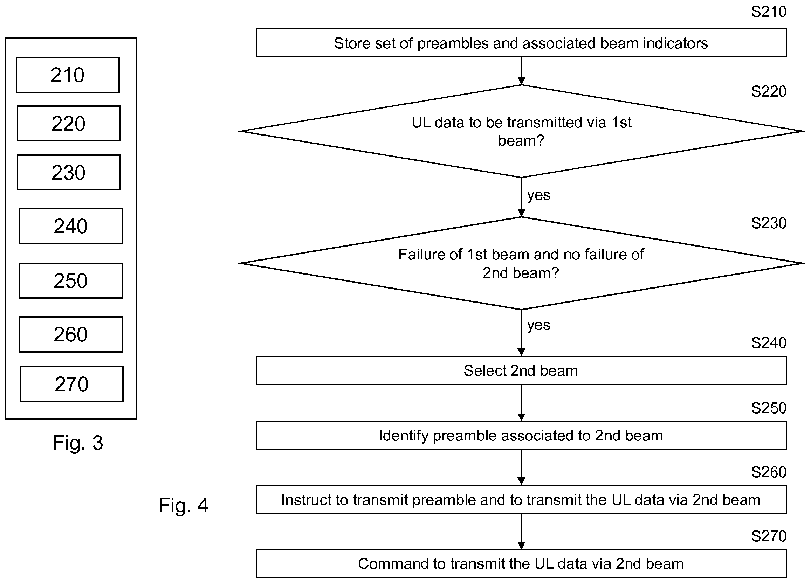

Fig. 3 shows an apparatus according to an embodiment of the invention. The apparatus may be a terminal such as a UE, an loT device, etc., or an element thereof. Fig. 4 shows a method according to an embodiment of the invention. The apparatus according to Fig. 3 may perform the method of Fig. 4 but is not limited to this method. The method of Fig. 4 may be performed by the apparatus of Fig. 3 but is not limited to being performed by this apparatus.

The apparatus comprises means for storing 210, means for monitoring 220, means for checking 230, means for selecting 240, means for identifying 250, means for instructing 260, and means for commanding 270. The means for storing 210, means for monitoring 220, means for checking 230, means for selecting 240, means for identifying 250, means for instructing 260, and means for commanding 270 may be a storing means, monitoring means, checking means, selecting means, identifying means, instructing means, and commanding means, respectively. The means for storing 210, means for monitoring 220, means for checking 230, means for selecting 240, means for identifying 250, means for instructing 260, and means for commanding 270 may be a storage, monitor, checker, selector, identifier, instructor, and commander, respectively. The means for storing 210, means for monitoring 220, means for checking 230, means for selecting 240, means for identifying 250, means for instructing 260, and means for commanding 270 may be a storing processor, monitoring processor, checking processor, selecting processor, identifying processor, instructing processor, and commanding processor, respectively.

The means for storing 210 stores a set of preambles of a random access and a set of beam indicators (S210). Each of the preambles of the set of preambles is not reserved for a contention-free random access but for a contention based random access. Each of the beam indicators of the set of beam indicators indicates a respective exactly one beam. Each of the preambles of the set of preambles is associated to a respective exactly one beam indicator of the set of beam indicators.

The means for monitoring 220 monitors if uplink data are to be transmitted in a communication via a first beam of plural active beams (S220). Each of the active beams is configured to be used for the communication, but they do not need to be actually used for the communication.

The means for checking 230 checks if the first beam has a failure and if a second beam of the active beams does not have a failure (S230).

S220 and S230 may be performed in an arbitrary sequence. The second one may be performed only if the first one is affirmative. S220 and S230 may be performed fully or partly in parallel.

If the uplink data are to be transmitted (S220 = "yes") and the first beam has a failure and the second beam does not have a failure (S230 = "yes"):
- the means for selecting 240 selects the second beam (S240);
- the means for identifying 250 identifies a first preamble of the set of preambles (S250);
- the means for instructing 260 instructs transmitting the first preamble (S260); and
- the means for commanding 270 commands transmitting the uplink data in the communication via the second beam (S270).
The first preamble is associated to the second beam.

In some embodiments, S270 may be performed only if a response to the transmitting of the first preamble (S260) is received.

Instead of a transmitting a preamble reserved for contention-free random access, a (arbitrary) preamble may be transmitted at an occasion not reserved for contention-free random access. As a further alternative, a preamble may be transmitted at an occasion, wherein the combination of preamble and occasion is not reserved for the contention-free random access.

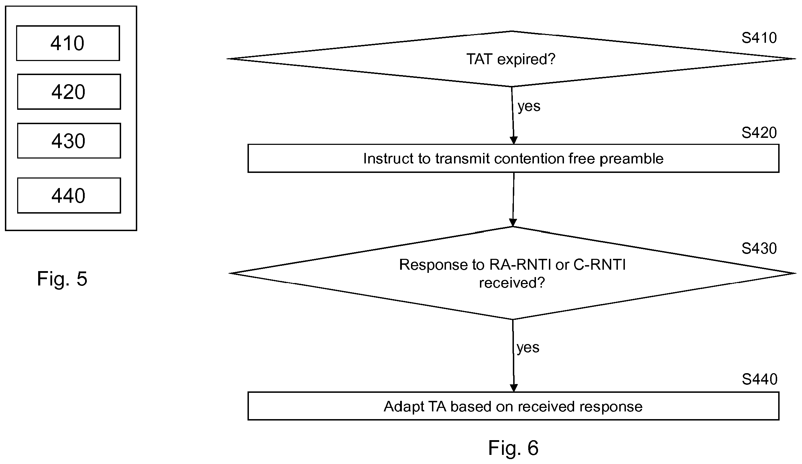

Fig. 5 shows an apparatus according to an embodiment of the invention. The apparatus may be a terminal such as a UE, an loT device, etc., or an element thereof. Fig. 6 shows a method according to an embodiment of the invention. The apparatus according to Fig. 5 may perform the method of Fig. 6 but is not limited to this method. The method of Fig. 6 may be performed by the apparatus of Fig. 5 but is not limited to being performed by this apparatus.

The apparatus comprises means for detecting 410, means for instructing 420, means for monitoring 430, and means for adapting 440. The means for detecting 410, means for instructing 420, means for monitoring 430, and means for adapting 440 may be a detecting means, instructing means, monitoring means, and adapting means, respectively. The means for detecting 410, means for instructing 420, means for monitoring 430, and means for adapting 440 may be a detector, instructor, monitor, and adaptor, respectively. The means for detecting 410, means for instructing 420, means for monitoring 430, and means for adapting 440 may be a detecting processor, instructing processor, monitoring processor, and adapting processor, respectively.

The means for detecting 410 detects if a time alignment timer of a first beam configured to be used for a communication of a terminal with a network is expired (S410).

If the time alignment timer is expired (S410 = "yes"), the means for instructing 420 instructs transmitting a first preamble of a random access (S420). The first preamble is reserved for contention-free random access.

The means for monitoring 430 monitors whether a response to the transmitting of the preamble is received (S430). The response may be addressed to a random access radio network temporary identifier of the terminal or to cell radio network temporary identifier of the terminal. The response comprises an indication of timing advance, wherein, if the response is addressed to the random access radio network temporary identifier, the resolution of the timing advance is higher than if the response is addressed to cell radio network temporary identifier.

If the response is received (S430 = "yes"), the means for adapting 440 adapts a timing advance of the communication according to the response.

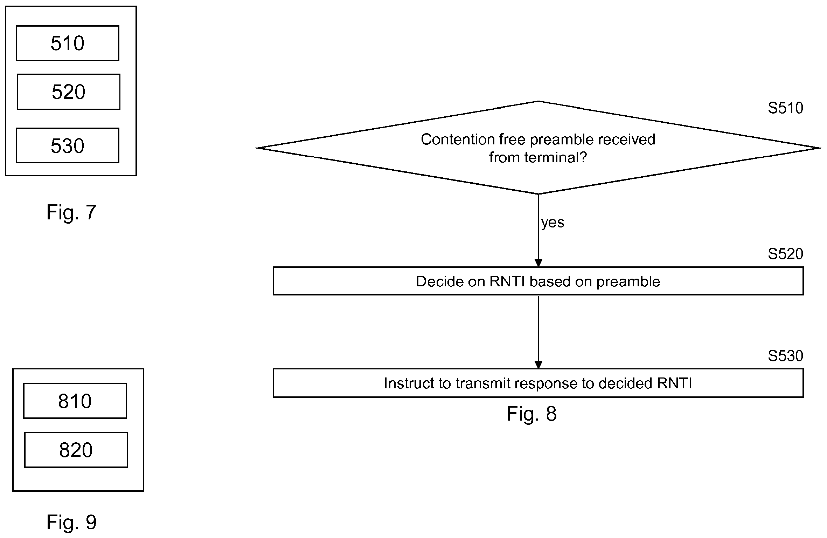

Fig. 7 shows an apparatus according to an embodiment of the invention. The apparatus may be a base station such as a gNB, a eNB, etc., or an element thereof. Fig. 8 shows a method according to an embodiment of the invention. The apparatus according to Fig. 7 may perform the method of Fig. 8 but is not limited to this method. The method of Fig. 8 may be performed by the apparatus of Fig. 7 but is not limited to being performed by this apparatus.

The apparatus comprises means for monitoring 510, means for deciding 520, and means for instructing 530. The means for monitoring 510, means for deciding 520, and means for instructing 530 may be a monitoring means, deciding means, and instructing means, respectively. The means for monitoring 510, means for deciding 520, and means for instructing 530 may be a monitor, decider, and instructor, respectively. The means for monitoring 510, means for deciding 520, and means for instructing 530 may be a monitoring processor, deciding processor, and instructing processor, respectively.

The means for monitoring 510 monitors if a preamble of a contention free random access is received from a terminal (S510). The terminal is in communication with a network.

If the preamble is received (S510 = "yes"), the means for deciding 520 decides, based on the preamble, if a response to the preamble is to be addressed to a random access radio network temporary identifier of the terminal or to cell radio network temporary identifier of the terminal (S520).

The means for instructing 530 instructs transmitting the response to the decided radio network temporary identifier of the terminal (S530).

Fig. 9 shows an apparatus according to an embodiment of the invention. The apparatus comprises at least one processor 810, at least one memory 820 including computer program code, and the at least one processor 810, with the at least one memory 820 and the computer program code, being arranged to cause the apparatus to at least perform the method according to one of Figs. 2, 4, 6, and 8.

One piece of information may be transmitted in one or plural messages from one entity to another entity. Each of these messages may comprise further (different) pieces of information.

Names of network elements, protocols, and methods are based on current standards. In other versions or other technologies, the names of these network elements and/or protocols and/or methods may be different, as long as they provide a corresponding functionality.

If not otherwise stated or otherwise made clear from the context, the statement that two entities are different means that they perform different functions. It does not necessarily mean that they are based on different hardware. That is, each of the entities described in the present description may be based on a different hardware, or some or all of the entities may be based on the same hardware. It does not necessarily mean that they are based on different software. That is, each of the entities described in the present description may be based on different software, or some or all of the entities may be based on the same software. Each of the entities described in the present description may be embodied in the cloud.

According to the above description, it should thus be apparent that example embodiments of the present invention provide, for example, a terminal such as a UE, a MTC device, an loT device etc, or a component thereof, an apparatus embodying the same, a method for controlling and/or operating the same, and computer program(s) controlling and/or operating the same as well as mediums carrying such computer program(s) and forming computer program product(s). According to the above description, it should thus be apparent that example embodiments of the present invention provide, for example, a base station such as a eNB or a gNB, or a component thereof, an apparatus embodying the same, a method for controlling and/or operating the same, and computer program(s) controlling and/or operating the same as well as mediums carrying such computer program(s) and forming computer program product(s).

Implementations of any of the above described blocks, apparatuses, systems, techniques or methods include, as non-limiting examples, implementations as hardware, software, firmware, special purpose circuits or logic, general purpose hardware or controller or other computing devices, or some combination thereof.

It is to be understood that what is described above is what is presently considered the preferred embodiments of the present invention. However, it should be noted that the description of the preferred embodiments is given by way of example only and that various modifications may be made without departing from the scope of the invention as defined by the appended claims.

## Claims

1. Apparatus, comprising
first means (10) for detecting configured to detect a beam failure of an active beam used for a communication with a network;
second means (15) for detecting configured to detect if a time alignment timer configured to be used for the communication with the network is expired;
means for monitoring (20) configured to monitor if a first beam is suitable for the communication;
means for checking configured to check whether the first beam belongs to a secondary timing advance group;
means for requesting configured to request a new timing advance information from the network by at least one of a medium access control message and a radio resource control message if the first beam belongs to the secondary timing advance group;
means for instructing (30) configured to instruct, if the beam failure is detected and the time alignment timer is expired and the first beam is suitable for the communication, one of:
transmitting a first preamble of a random access, wherein the first preamble is not reserved for contention-free random access;
transmitting a second preamble of the random access at a first occasion, wherein the first occasion is not reserved for contention-free access; and
transmitting a third preamble of the random access at a second occasion, wherein a combination of the third preamble and the second occasion is not reserved for contention-free access;
means for prohibiting configured to prohibit the means for instructing to instruct transmitting the first preamble if the first beam belongs to the secondary timing advance group;
**characterised by** comprising
means for checking configured to check if the active beam and the first beam belong to a same timing advance group;
means for inhibiting configured to inhibit the means for instructing to instruct transmitting if the active beam and the first beam belong to the same timing advance group;
means for commanding configured to command, if the active beam and the first beam belong to the same timing advance group, one of:
transmitting a fourth preamble of the random access, wherein the fourth preamble is reserved for contention-free random access;
transmitting a fifth preamble at a third occasion of the random access, wherein the third occasion is reserved for the contention-free random access; and
transmitting a sixth preamble at a fourth occasion of the random access, wherein a combination of the sixth preamble and the fourth occasion is reserved for contention-free random access.

2. The apparatus according to claim 1, further comprising
first means for storing configured to store one or more contention-free resources reserved for the contention-free random access, wherein each of the contention-free resources is one of a respective preamble, a respective occasion, and a combination of a respective preamble and a respective occasion; and at least one of
means for releasing configured to release the one or more contention-free resources if the time alignment timer is expired; and
means for prohibiting configured to prohibit the contention-free random access if the time alignment timer is expired.

3. The apparatus according to claim 2, wherein
the means for instructing is configured to instruct, if the beam failure is detected and the timer expiry is not detected, one of
• transmitting one of the stored preambles if the contention-free resources are preambles;
• transmitting a preamble at a stored occasion if the contention-free resources are occasions;
• transmitting one of the stored preambles at a related occasion if the contention-free resources are combinations of a respective preamble and a respective occasion.

4. Method, comprising
detecting a beam failure of an active beam used for a communication with a network (S10);
detecting if a time alignment timer configured to be used for the communication with the network is expired (S15);
monitoring if a first beam is suitable for the communication (S20); checking whether the first beam belongs to a secondary timing advance group;
requesting a new timing advance information from the network by at least one of a medium access control message and a radio resource control message if the first beam belongs to the secondary timing advance group;
instructing (S30), if the beam failure is detected and the time alignment timer is expired and the first beam is suitable for the communication, one of:
transmitting a first preamble of a random access, wherein the first preamble is not reserved for contention-free random access;
transmitting a second preamble of the random access at a first occasion, wherein the first occasion is not reserved for contention-free access; and
transmitting a third preamble of the random access at a second occasion, wherein a combination of the third preamble and the second occasion is not reserved for contention-free access;
prohibiting the instructing the transmitting the first preamble if the first beam belongs to the secondary timing advance group;
**characterised by** comprising checking if the active beam and the first beam belong to a same timing advance group;
inhibiting the instructing the transmitting if the active beam and the first beam belong to the same timing advance group;
commanding if the active beam and the first beam belong to the same timing advance group, one of:
transmitting a fourth preamble of the random access, wherein the fourth preamble is reserved for contention-free random access;
transmitting a fifth preamble at a third occasion of the random access, wherein the third occasion is reserved for the contention-free random access; and
transmitting a sixth preamble at a fourth occasion of the random access, wherein a combination of the sixth preamble and the fourth occasion is reserved for contention-free random access.

5. A computer program product comprising a set of instructions which, when executed on an apparatus, is configured to cause the apparatus to carry out the method according to claim 4.

## Patentansprüche

1. Vorrichtung, umfassend
erste Mittel (10) zum Detektieren, die dazu ausgelegt sind, einen Strahlausfall eines aktiven Strahls zu detektieren, der für eine Kommunikation mit einem Netzwerk verwendet wird;
zweite Mittel (15) zum Detektieren, die dazu ausgelegt sind, zu detektieren, ob ein Zeitabgleich-Timer, der zur Verwendung für die Kommunikation mit dem Netzwerk ausgelegt ist, abgelaufen ist;
Mittel zum Überwachen (20), die dazu ausgelegt sind, zu überwachen, ob ein erster Strahl für die Kommunikation geeignet ist;
Mittel zum Prüfen, die dazu ausgelegt sind, zu prüfen, ob der erste Strahl zu einer sekundären "Timing Advance"-Gruppe gehört;
Mittel zum Anfordern, die dazu ausgelegt sind, neue "Timing Advance"-Informationen vom Netz durch eine Medienzugriffssteuernachricht und/oder eine Funkressourcensteuernachricht anzufordern, wenn der erste Strahl zu der sekundären "Timing Advance"-Gruppe gehört;
Mittel zum Anweisen (30), die dazu ausgelegt sind, wenn der Strahlenausfall detektiert wird und der Zeitabgleich-Timer abgelaufen ist und der erste Strahl für die Kommunikation geeignet ist, eines der folgenden anzuweisen:
Übertragen einer ersten Präambel eines wahlfreien Zugriffs, wobei die erste Präambel nicht für einen konfliktfreien wahlfreien Zugriff reserviert ist;
Übertragen einer zweiten Präambel des wahlfreien Zugriffs bei einem ersten Anlass, wobei der erste Anlass nicht für einen konfliktfreien Zugriff reserviert ist; und
Übertragen einer dritten Präambel des wahlfreien Zugriffs bei einem zweiten Anlass, wobei eine Kombination aus der dritten Präambel und dem zweiten Anlass nicht für den konfliktfreien Zugriff reserviert ist;
Mittel zum Verhindern, die dazu ausgelegt sind, die Mittel zum Anweisen daran zu hindern, das Übertragen der ersten Präambel anzuweisen, wenn der erste Strahl zu der sekundären "Timing Advance"-Gruppe gehört;
**dadurch gekennzeichnet, dass** es umfasst
Mittel zum Prüfen, die dazu ausgelegt sind, zu prüfen, ob der aktive Strahl und der erste Strahl zu einer gleichen "Timing Advance"-Gruppe gehören;
Mittel zum Unterbinden, die dazu ausgelegt sind, die Mittel zum Anweisen zu unterbinden, das Übertragen anzuweisen, wenn der aktive Strahl und der erste Strahl zur gleichen "Timing Advance"-Gruppe gehören;
Mittel zum Befehlen, die dazu ausgelegt sind, wenn der aktive Strahl und der erste Strahl zur gleichen "Timing Advance"-Gruppe gehören, eines der folgenden zu befehlen:
Übertragen einer vierten Präambel des wahlfreien Zugriffs, wobei die vierte Präambel für den konfliktfreien wahlfreien Zugriff reserviert ist;
Übertragen einer fünften Präambel bei einem dritten Anlass des wahlfreien Zugriffs, wobei der dritte Anlass für den konfliktfreien wahlfreien Zugriff reserviert ist; und
Übertragen einer sechsten Präambel bei einem vierten Anlass des wahlfreien Zugriffs, wobei eine Kombination aus der sechsten Präambel und dem vierten Anlass für den konfliktfreien wahlfreien Zugriff reserviert ist.

2. Vorrichtung nach Anspruch 1 ferner umfassend erste Mittel zum Speichern, die dazu ausgelegt sind, eine oder mehrere konfliktfreie Ressourcen zu speichern, die für den konfliktfreien wahlfreien Zugriff reserviert sind, wobei jede der konfliktfreien Ressourcen eine jeweilige Präambel, ein jeweiliger Anlass und eine Kombination aus einer jeweiligen Präambel und einem jeweiligen Anlass ist; und
Mittel zur Freigabe, die dazu ausgelegt sind, die eine oder mehrere konfliktfreie Ressourcen freizugeben, wenn der Zeitabgleich-Timer abgelaufen ist; und/oder Mittel zum Verhindern, die dazu ausgelegt sind, den konfliktfreien wahlfreien Zugriff zu verhindern, wenn der Zeitabgleich-Timer abgelaufen ist.

3. Vorrichtung nach Anspruch 2, wobei
die Mittel zum Anweisen dazu ausgelegt sind, wenn der Strahlenausfall detektiert wird und der Ablauf des Timers nicht detektiert wird, eines der folgenden anzuweisen
- Übertragen einer der gespeicherten Präambeln, wenn die konfliktfreien Ressourcen Präambeln sind;
- Übertragen einer Präambel bei einem gespeicherten Anlass, wenn die konfliktfreien Ressourcen Anlässe sind;
- Übertragen einer der gespeicherten Präambeln bei einem verwandten Anlass, wenn die konfliktfreien Ressourcen Kombinationen aus einer jeweiligen Präambel und einem jeweiligen Anlass sind.

4. Verfahren, umfassend
Detektieren eines Strahlausfalls eines aktiven Strahls, der für eine Kommunikation mit einem Netzwerk (S10) verwendet wird;
Detektieren, ob ein Zeitabgleich-Timer, der dazu ausgelegt ist, für die Kommunikation mit dem Netzwerk verwendet zu werden, abgelaufen ist (S15);
Überwachen, ob ein erster Strahl für die Kommunikation geeignet ist (S20);
Prüfen, ob der erste Strahl zu einer sekundären "Timing Advance"-Gruppe gehört;
Anfordern neuer "Timing Advance"-Informationen vom Netzwerk durch eine Medienzugriffssteuernachricht und/oder eine Funkressourcen-Steuernachricht, wenn der erste Strahl zu der sekundären "Timing Advance"-Gruppe gehört;
wenn der Strahlausfall detektiert wird und der Zeitabgleich-Timer abgelaufen ist und der erste Strahl für die Kommunikation geeignet ist, eines der folgenden anzuweisen (S30):
Übertragen einer ersten Präambel eines wahlfreien Zugriffs, wobei die erste Präambel nicht für den konfliktfreien wahlfreien Zugriff reserviert ist;
Übertragen einer zweiten Präambel des wahlfreien Zugriffs bei einem ersten Anlass, wobei der erste Anlass nicht für den konfliktfreien Zugriff reserviert ist; und
Übertragen einer dritten Präambel des wahlfreien Zugriffs bei einem zweiten Anlass, wobei eine Kombination aus der dritten Präambel und dem zweiten Anlass nicht für den konfliktfreien Zugriff reserviert ist;
die Anweisung zum Übertragen der ersten Präambel zu verhindern, wenn der erste Strahl zu der sekundären "Timing Advance"-Gruppe gehört;
**dadurch gekennzeichnet, dass** es umfasst
Überprüfen, ob der aktive Strahl und der erste Strahl zu einer gleichen "Timing Advance"-Gruppe gehören;
Unterbinden der Anweisung zum Übertragen, wenn der aktive Strahl und der erste Strahl zur gleichen "Timing Advance"-Gruppe gehören;
wenn der aktive Strahl und der erste Strahl zur gleichen "Timing Advance"-Gruppe gehören, eines der folgenden zu befehlen:
Übertragen einer vierten Präambel des wahlfreien Zugriffs, wobei die vierte Präambel für den konfliktfreien wahlfreien Zugriff reserviert ist;
Übertragen einer fünften Präambel bei einem dritten Anlass des wahlfreien Zugriffs, wobei der dritte Anlass für den konfliktfreien wahlfreien Zugriff reserviert ist; und
Übertragen einer sechsten Präambel bei einem vierten Anlass des wahlfreien Zugriffs, wobei eine Kombination aus der sechsten Präambel und dem vierten Anlass für den konfliktfreien wahlfreien Zugriff reserviert ist.

5. Computerprogrammprodukt, umfassend einen Satz von Anweisungen, das, wenn es auf einer Vorrichtung ausgeführt wird, dazu ausgelegt ist, die Vorrichtung zu veranlassen, das Verfahren nach Anspruch 4 durchzuführen.

## Revendications

1. Appareil, comprenant
un premier moyen (10) de détection configuré pour détecter une défaillance de faisceau d'un faisceau actif utilisé pour une communication avec un réseau ;
un deuxième moyen (15) de détection configuré pour détecter si un temporisateur d'alignement temporel configuré pour être utilisé pour la communication avec le réseau est expiré ;
un moyen (20) de surveillance configuré pour surveiller si un premier faisceau est approprié pour la communication ;
un moyen de vérification configuré pour vérifier si le premier faisceau appartient à un groupe secondaire d'avance de synchronisation ;
un moyen de demande configuré pour demander une nouvelle information d'avance de synchronisation au réseau par au moins un message parmi un message de commande d'accès au support et un message de gestion des ressources radioélectriques si le premier faisceau appartient au groupe secondaire d'avance de synchronisation ;
un moyen (30) de prescription configuré pour prescrire, si la défaillance de faisceau est détectée et le temporisateur d'alignement temporel est expiré et le premier faisceau est approprié pour la communication, une action parmi :
l'émission d'un premier préambule d'un accès aléatoire, le premier préambule n'étant pas réservé pour un accès aléatoire sans conflit ;
l'émission d'un deuxième préambule de l'accès aléatoire à une première occasion, la première occasion n'étant pas réservée pour un accès sans conflit ; et
l'émission d'un troisième préambule de l'accès aléatoire à une deuxième occasion, une combinaison du troisième préambule et de la deuxième occasion n'étant pas réservée pour un accès sans conflit ;
un moyen d'interdiction configuré pour interdire au moyen de prescription de prescrire l'émission du premier préambule si le premier faisceau appartient au groupe secondaire d'avance de synchronisation ; **caractérisé en ce qu'**il comprend
un moyen de vérification configuré pour vérifier si le faisceau actif et le premier faisceau appartiennent à un même groupe d'avance de synchronisation ;
un moyen d'empêchement configuré pour empêcher le moyen de prescription de prescrire l'émission si le faisceau actif et le premier faisceau appartiennent au même groupe d'avance de synchronisation ;
un moyen de commandement configuré pour commander, si le faisceau actif et le premier faisceau appartiennent au même groupe d'avance de synchronisation, une action parmi :
l'émission d'un quatrième préambule de l'accès aléatoire, le quatrième préambule étant réservé pour un accès aléatoire sans conflit ;
l'émission d'un cinquième préambule à une troisième occasion de l'accès aléatoire, la troisième occasion étant réservée pour l'accès aléatoire sans conflit ; et
l'émission d'un sixième préambule à une quatrième occasion de l'accès aléatoire, une combinaison du sixième préambule et de la quatrième occasion étant réservée pour un accès aléatoire sans conflit.

2. Appareil selon la revendication 1, comprenant en outre
un premier moyen de stockage configuré pour stocker une ou plusieurs ressources sans conflit réservées pour l'accès aléatoire sans conflit, chacune des ressources sans conflit étant une ressource parmi un préambule respectif, une occasion respective, et une combinaison d'un préambule respectif et d'une occasion respective ; et au moins un moyen parmi
un moyen de libération configuré pour libérer la ou les ressources sans conflit si le temporisateur d'alignement temporel est expiré ; et
un moyen d'interdiction configuré pour interdire l'accès aléatoire sans conflit si le temporisateur d'alignement temporel est expiré.

3. Appareil selon la revendication 2,
le moyen de prescription étant configuré pour prescrire, si la défaillance de faisceau est détectée et l'expiration du temporisateur n'est pas détectée, une action parmi
• l'émission d'un des préambules stockés si les ressources sans conflit sont des préambules ;
• l'émission d'un préambule à une occasion stockée si les ressources sans conflit sont des occasions ;
• l'émission d'un des préambules stockés à une occasion associée si les ressources sans conflit sont des combinaisons d'un préambule respectif et d'une occasion respective.

4. Procédé, comprenant
la détection d'une défaillance de faisceau d'un faisceau actif utilisé pour une communication avec un réseau (S10) ;
la détection du fait qu'un temporisateur d'alignement temporel configuré pour être utilisé pour la communication avec le réseau est expiré ou non (S15) ; la surveillance du caractère approprié d'un premier faisceau pour la communication (S20) ;
la vérification de l'appartenance ou non du premier faisceau à un groupe secondaire d'avance de synchronisation ;
la demande d'une nouvelle information d'avance de synchronisation au réseau par au moins un message parmi un message de commande d'accès au support et un message de gestion des ressources radioélectriques si le premier faisceau appartient au groupe secondaire d'avance de synchronisation ;
la prescription (S30), si la défaillance de faisceau est détecté et le temporisateur d'alignement temporel est expiré et le premier faisceau est approprié pour la communication, d'une action parmi :
l'émission d'un premier préambule d'un accès aléatoire, le premier préambule n'étant pas réservé pour un accès aléatoire sans conflit ;
l'émission d'un deuxième préambule de l'accès aléatoire à une première occasion, la première occasion n'étant pas réservée pour un accès sans conflit ; et
l'émission d'un troisième préambule de l'accès aléatoire à une deuxième occasion, une combinaison du troisième préambule et de la deuxième occasion n'étant pas réservée pour un accès sans conflit ;
l'interdiction de la prescription de l'émission du premier préambule si le premier faisceau appartient au groupe secondaire d'avance de synchronisation ; **caractérisé en ce qu'**il comprend
la vérification de l'appartenance ou non du faisceau actif et du premier faisceau à un même groupe d'avance de synchronisation ;
l'empêchement de la prescription de l'émission si le faisceau actif et le premier faisceau appartiennent au même groupe d'avance de synchronisation ;
le commandement, si le faisceau actif et le premier faisceau appartiennent au même groupe d'avance de synchronisation, d'une action parmi :
l'émission d'un quatrième préambule de l'accès aléatoire, le quatrième préambule étant réservé pour un accès aléatoire sans conflit ;
l'émission d'un cinquième préambule à une troisième occasion de l'accès aléatoire, la troisième occasion étant réservée pour l'accès aléatoire sans conflit ; et
l'émission d'un sixième préambule à une quatrième occasion de l'accès aléatoire, une combinaison du sixième préambule et de la quatrième occasion étant réservée pour un accès aléatoire sans conflit.

5. Produit de programme informatique comprenant un ensemble d'instructions qui, lorsqu'il est exécuté sur un appareil, est configuré pour amener l'appareil à réaliser le procédé selon la revendication 4.
